# EUROPEAN PATENT APPLICATION

(11) **EP 3 975 165 A1**
(43) Date of publication of application: **30.03.2022**
(21) Application number: 21198801.9
(22) Date of filing: 24.09.2021
(51) Int. Cl.: G09G 5/00, G06F 3/06, G09G 5/36, G09G 5/395, H04N 21/426, G09G 5/399, G06F 3/147

(54) **VGA CARD ASSEMBLY, MONITORING DEVICE THEREOF, AND IMAGE OUTPUT METHOD PERFORMED THEREBY**

(30) Priority: 25.09.2020 TW 109133354
(71) Applicant: Giga-Byte Technology Co., Ltd., New Taipei City (TW)
(72) Inventor: HUANG, Shun-Chih, New Taipei City (TW); LU, Ching-Yu, New Taipei City (TW); WU, Liang Yu, New Taipei City (TW); LEE, Jeffrey, New Taipei City (TW); LI, Yen-Lin, New Taipei City (TW); YANG, Chieh-Hsi, New Taipei City (TW); LIN, HANCHAO, New Taipei City (TW)
(74) Representative: dompatent von Kreisler Selting Werner - Partnerschaft von Patent- und Rechtsanwälten mbB

(57) **Abstract**

A VGA card assembly includes a VGA card (1) with a circuit board (11) for generating a status signal and a monitoring device (2). The monitoring device (2) has a microprocessor (21) for receiving the status signal, a status display (23) and a non-volatile memory (24) with at least one first storage block (241) and at least one second storage block (242). Before completely writing a second file into the second storage block (242), the microprocessor (21) obtains a first file stored in the first storage block (241), and enables the status display (23) to output an image according to at least one of the status signal and the first file. After completely writing the second file into the second storage block (242), the microprocessor (21) obtains the second file stored in the second storage block (242), and enables the status display (23) to output an image according to at least one of the status signal and the second file.

## Description

### BACKGROUND

### 1. Technical Field

The present invention relates to the field of VGA cards, and more particularly, to a VGA card assembly capable of quickly replacing images without discontinuity and a monitoring device thereof, and an image output method carried out on the VGA card assembly.

### 2. Related Art

In response to the demand of graphical or gaming applications for the quality and refresh rate of displayed image, such as high resolution, complex three-dimensional object textures and high-speed changing content, etc., the computer market requires much better performance of VGA cards than in the past. Further, the additional functions, such as temperature sensing function and fan driving function, have correspondingly become more and more complicated. However, for commercially available VGA cards, the monitoring on the above additional functions usually can only be carried out by the applications installed on the computer, which obviously causes inconvenience to the user. Especially when the image delay occurs during the execution of the game programs, the user usually cannot immediately exit the game programs to obtain the current operating status of the VGA card, and thus cannot immediately find out whether the VGA card abnormally.

Currently, there are monitoring devices on the market currently which can display the operating status of the VGA card. Users can check various operating parameters of the VGA card through the monitoring device, and the monitoring devices are usually set with background images. When the user attempts to change the background images, it is usually necessary to send the image files through the VGA card to the monitoring devices from the motherboard of the computer, and the memory for storing image files in the monitoring devices must be cleared before the space can be used to store the background images. Therefore, the process of setting the image files as the background images is not only highly time-consuming, but also may likely to retransmit the entire image due to occasional errors, which further deteriorates the efficiency of replacing the background images.

### SUMMARY

According to an embodiment of the present invention, a VGA card assembly, adapted to be combined to a motherboard and a display, comprises a VGA card and a monitoring device. The VGA card comprises a circuit board, and the circuit board arranges to generate a status signal. The monitoring device comprises a microprocessor, a status display and a non-volatile memory, wherein the microprocessor is coupled to the status display, the non-volatile memory and the circuit board, the microprocessor receives the status signal, and the non-volatile memory comprises at least one first storage block and at least one second storage block. Before the microprocessor completely writes a second file into the at least one second storage block, the microprocessor obtains a first file stored in the at least one first storage block, and enables the status display to output images according to one of the status signal and the first file. After the microprocessor completely writes a second file into the at least one second storage block, the microprocessor obtains a second file stored in the at least one second storage block, and enables the status display to output images according to at least one of the status signal and the second file.

According to another embodiment of the present invention, a monitoring device, arranged to form, together with a VGA card, a VGA card assembly, comprises a communication port, a non-volatile memory, a microprocessor and a status display. The communication port arranges to communicatively connect to the VGA card, to receives a status signal. The non-volatile memory comprises at least one first storage block and at least one second storage block. The microprocessor is coupled to the communication port and the non-volatile memory, and generates an image data. The status display is coupled to the microprocessor, and generates an image according to the image data. Before the microprocessor completely writes a second file into the at least one second storage block, the microprocessor obtains a first file stored in the at least one first storage block, and generates the image data according to one of the status signal and the first file. After the microprocessor completely writes a second file into the at least one second storage block, the microprocessor obtains a second file stored in the at least one second storage block, and generates the image data according to one of the status signal and the second file.

According to yet another embodiment of the present invention, an image output method of a VGA card assembly, for a status display of VGA card assembly to output images, is provided, wherein a microprocessor of the VGA card assembly is coupled to a non-volatile memory, the non-volatile memory comprises at least one first storage block and at least one second storage block, and the at least one first storage block stores a first file already. The image output method of a VGA card assembly comprises receiving, by the microprocessor, a second file; writing, by the microprocessor, the second file into the at least one second storage block; enabling, by the microprocessor, the status display to output images corresponding to the first file before completely writing a second file into the at least one second storage block; and enabling, by the microprocessor, the status display to output images corresponding to the image of the second file after completely writing a second file into the at least one second storage block, and deleting the first file stored in the at least one first storage block.

According to the above, the contents, which provides the VGA card assembly, monitoring device thereof, and image output method performed thereby, comprises plenty of storage blocks of memory storage files, which can store each of the files to be deleted (e. g. the first file) and the files to be wrote (e. g. the second file) into different storage blocks, which does not need to store these two files in the same location. Therefore, the user does not need to delete the file used to display the current image in the non-volatile memory, and can write another file to be added immediately. This will not only reduce the duration between the store command by users and the display file, but also avoid the situation that no image file can be displayed during the duration. In addition, if an error occurs when writing another file (e. g. above-mentioned second file), the original file (e. g. above-mentioned first file) can be still available for the status display.

### BRIEF DESCRIPTION OF THE DRAWINGS

FIG.1 is a system architecture view of a VGA card assembly according to an embodiment of the present invention.
FIG. 2 is a stereo view of the VGA card assembly according to an embodiment of the present invention.
FIG. 3 is a schematic view of the storage space of the VGA card assembly according to a method of an embodiment of the present invention.
FIG. 4 is a schematic view of the storage space of the VGA card assembly according to another method of an embodiment of the present invention.
FIG. 5 is a flow chart of an image output method according to an embodiment of the present invention.
FIG. 6 is a flow chart illustrating details of the process S2 of the image output method according to an embodiment of the present invention.

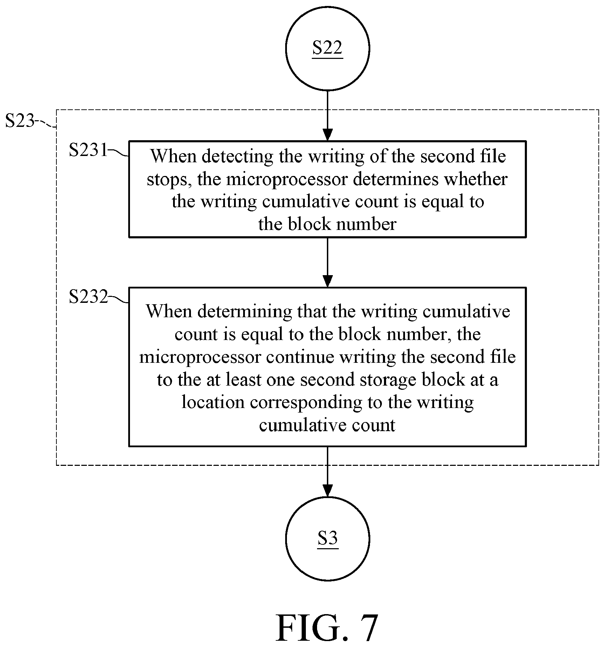

FIG. 7 is a flow chart illustrating details of the process S23 of the image output method according to an embodiment of the present invention.

### DETAILED DESCRIPTION

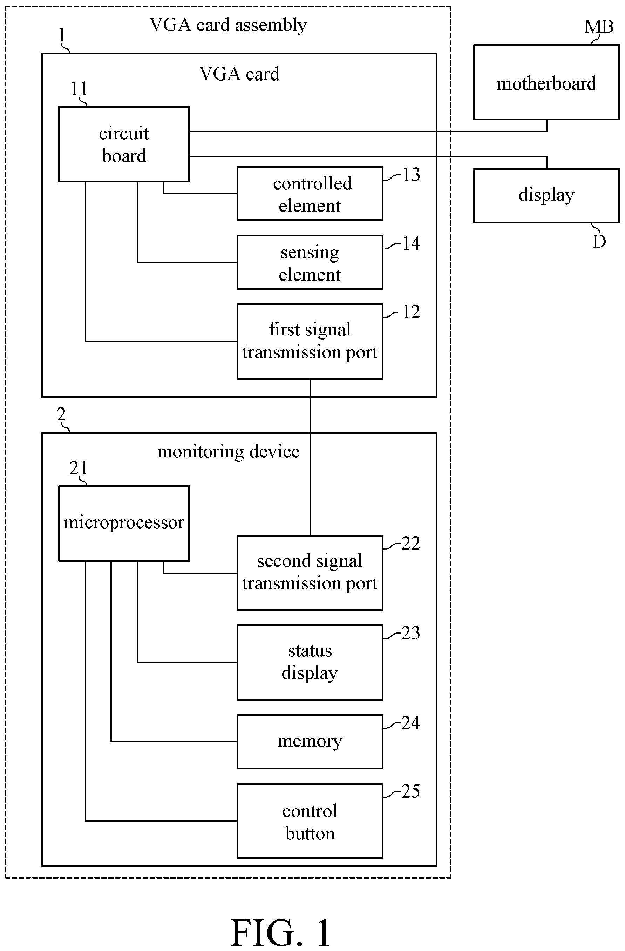

Refer to FIG. 1, FIG. 1 is a system architecture view of a VGA card assembly according to an embodiment of the present invention. As illustrated in FIG. 1, the present embodiment of the present invention provides a VGA card assembly, which is combined between a motherboard MB and a display D, and the VGA card assembly comprises a VGA card 1 and a monitoring device 2. The VGA card 1 is used to at least perform all calculation functions of a general VGA card, and reduce the calculation burden for image processing performed by the arithmetic processor which is integrated in the motherboard MB. The VGA card 1 can be a discrete graphics processing unit (dGPU) or integrated graphics processing unit (iGPU). The monitoring device 2 is coupled to the VGA card 1, so that the operations of the VGA card 1 can be independent of the monitoring process of the motherboard MB. The detailed structure will be described later.

In the embodiment, the VGA card 1 comprises a circuit board 11 and a first signal transmission port 12, wherein the circuit board 11 is coupled to the motherboard MB, and refers to commands of the motherboard MB to generate and send a display signal into the display D to display images. The first signal transmission port 12 is coupled to the circuit board 11, in order to receive a signal from the circuit board 11 and output the signal to the monitoring device 2, or receive a signal from the monitoring device 2 and output the signal to the circuit board 11. Further, the VGA card 1 further comprises a controlled element 13 or a sensing element 14. The controlled element 13 may be a lamp, a fan or other elements that can operate based on the received electrical signals. The sensing element 14 may be a temperature sensor or an element capable of detecting environmental conditions. For the overall operations of the present invention, the method of operating the circuit board 11 resides in that: by coupling to the first signal transmission port 12, the controlled element 13 or the sensing element 14 of the circuit board 11, the circuit board 11 may generate a status signal according to the operations status of the circuit board 11, the controlled element 13 or the sensing element 14 (wherein the status signal comprises but is not limited to: the operation data of the GPU, the rotating speed of the fan, the temperature of the temperature sensor, etc.), and may output this status signal to the monitoring device 2 through the first signal transmission port 12, or receive a control command from the monitoring device 2 through the first signal transmission port 12 to control the circuit board 11 or the controlled element 13.

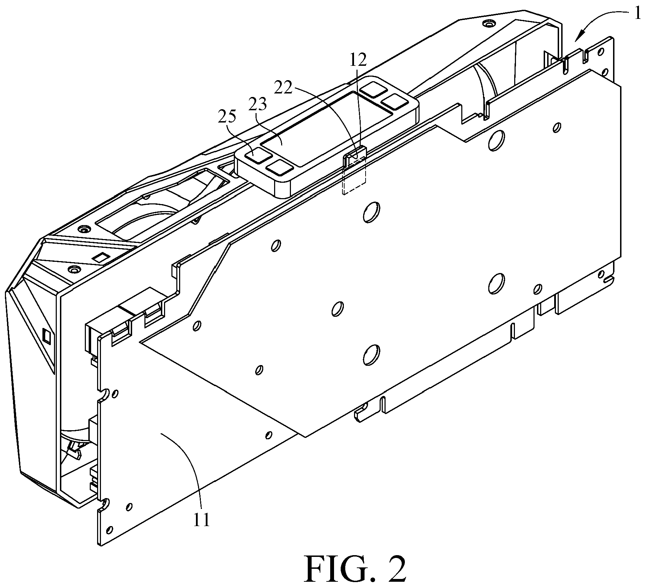

Refer to FIG. 1 and FIG. 2, FIG. 2 is a stereo view of the VGA card assembly according to an embodiment of the present invention. The monitoring device 2 of the embodiment comprises a microprocessor 21, a second signal transmission port 22, a status display 23 and a memory 24, wherein the microprocessor 21 is coupled to the second signal transmission port 22, the status display 23, and the memory 24. Furthermore, the second signal transmission port 22 is connected communicably to the first signal transmission port 12 to receive above-mentioned status signal, and further sends the status signal to the microprocessor 21. The status display 23 receives an image data in order to be enabled by the microprocessor 21 to output an image. The status display 23 is preferably a touch screen, which outputs the above-mentioned image in an image manner according to the image data and generates operating signals according to the touch of users. The microprocessor 21 may send the above-mentioned control command to the VGA card 1 according to the operating signals though the second signal transmission port 22 in order to control operation of the circuit board 11, the controlled element 13, or the sensing element 14. The memory 24 is arranged to store data for operating the monitoring device 2 and image files as background images, and the memory 24 is preferably implemented with a non-volatile memory in order to store the written image files without being supplied by electricity. Furthermore, the monitoring device 2 also can comprise a control button 25 to generate the above-mentioned operating signals. In this case, the status display 23 may be an ordinary screen without the touch function. In conclusion, the microprocessor 21 generates image data according to one of above-mentioned status signal and image files. For example, the status signal may be a character symbol to show the operating status of the circuit board 11, the controlled element 13 or the sensing element 14. The image files may be the background images displayed in the area outside the character symbol, and the image data is generated based on the status signal and the image files. In another example, when the monitoring device 2 is in a standby mode, the image data can correspond only to the image files in order to make the status display 23 show the whole content of the image files.

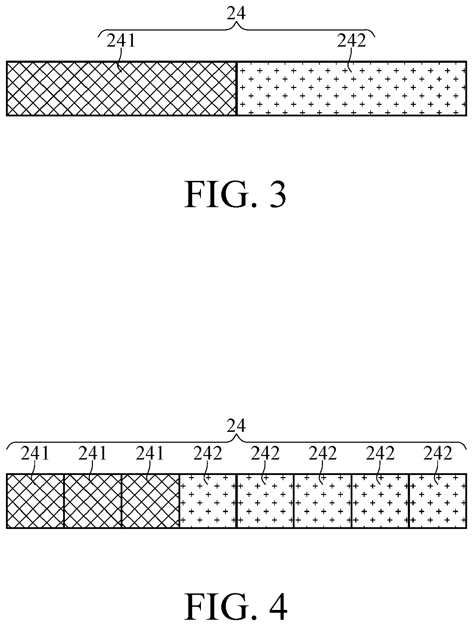

Regarding the memory 24 for storing the image files in this embodiment, please refer to schematic views of the storage space of the memory 24 shown in FIGs. 3 and 4. The memory 24 implemented by a non-volatile memory comprises many storage blocks, wherein the number of storage blocks is not limited in the embodiment. Among these storage blocks, at least one storage block storing a first file is defined as at least one first storage block 241, which can be a single storage block (as illustrated in FIG. 3) or multiple storage blocks (as illustrated in FIG. 4). On the other hand, the storage blocks in the memory 24 different from the first storage block 241 is defined as at least one second storage block 242, which can also be a single storage block (as illustrated in FIG. 3) or multiple storage blocks (as illustrated in FIG. 4). In an implementation of this embodiment, as illustrated in FIG. 3, the total number of storage blocks of the memory 24 is two, wherein one of the storage blocks is the first storage block 241 storing the first file, and the other is the second storage block 242 storing a second file. In addition, the storage space of the first storage block 241 and the second storage block 242 are preferable of a substantially the same size. In another implementation of the embodiment, as illustrated in FIG. 4, the total number of storage blocks of the memory 24 is greater than two, e.g., the total number is eight, and one or more of them (such as three, as shown in FIG. 4) are the first storage block 241 storing the first file, and the others (such as five, as shown in FIG. 4) are the second storage block 242 for storing the second file. Please note that in practice, when the memory 24 comprises more than two second storage blocks 242 as illustrated in FIG. 4, all the second storage blocks 242 can be used to store the second file, or only part of the second storage blocks 242 are used to store the second file. The above-mentioned first file and second file can be used as background images, and the first file may be a single image file or a group of image files that can be played continuously. Similarly, the second file may also be a single image or a group of image files that can be played continuously.

The above-mentioned planning for the storage space of the memory 24 is based on the characteristics of the non-volatile memory, which mean that when the same storage space in the non-volatile memory is to be reused, the data stored therein must be erased first, so as to write updated data into this storage space. Under above-mentioned planning structure of multiple storage blocks of the memory 24, the first file in the first storage block 241 can be deleted after the second file is completely written into the second storage block 242. Therefore, it not only can ensure that the background image for the status display 23 is stored in the memory 24 at any time, but also when the user wants to replace the first file with the second file as the background image, the operation of deleting the first file can be accomplished after the second file is completely written and displayed on the status display 23, thus reducing the duration from the storing command being released from the user to the second file being displayed by the status display 23.

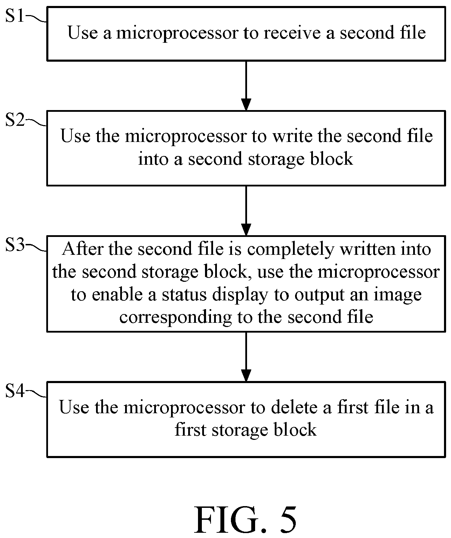

Refer to FIG. 5, which is a flow chart of the image output method of the display card assembly according to an embodiment of the present invention. The premise of this image output method is that the first file has been stored in the first storage block 241 of the memory 24, and the microprocessor 21 enables the status display 23 to output the image corresponding to the first file before the second file is completely written into the second storage block 242, e.g., by using the first file as a background image. When executing the image output method of the embodiment as illustrated in the step S1, the microprocessor 21 receives the second file from the motherboard MB through the circuit board 11, the first signal transmission port 12, and the second signal transmission port 22. As illustrated in the step S2, the microprocessor 21 writes the received second file into the second storage block 242. Next, as illustrated in the step S3, after the second file is completely written into the second storage block 242, the microprocessor 21 can enable the status display 23 to output the image corresponding to the second file. Finally, as illustrated in the step S4, the microprocessor 21 deletes the first file from the first storage block 241 to complete the image output method of the embodiment.

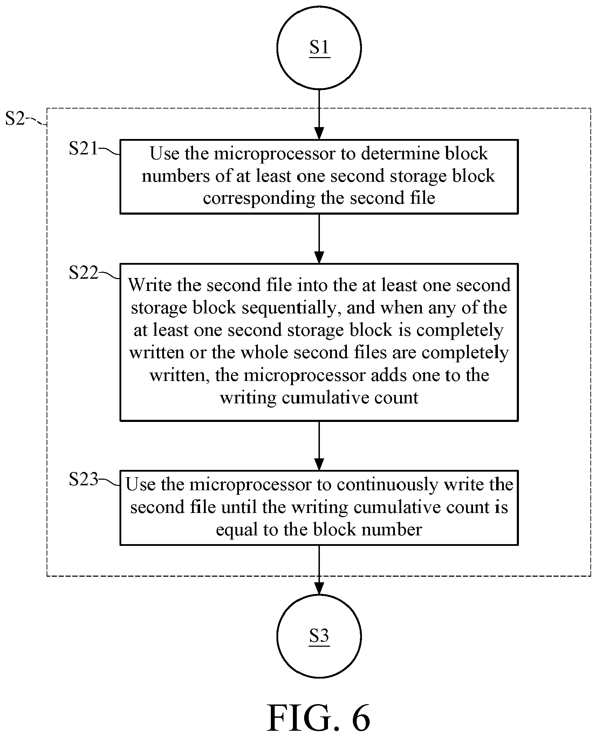

The step S2 mentioned above is preferable to further comprise steps S21 to S23 as illustrated in FIG. 6 in order to confirm the progress of writing the second file into the second storage block 242 at any time. To achieve this goal, the microprocessor 21 may be built in with a writing cumulative count, and the microprocessor 21 can increase the writing cumulative count by 1 when a second storage block is completely written by using the flag manner every time, or increase the writing cumulative count by 1 when finishing the overall writing of the second file. Further in step S21, firstly, the microprocessor 21 predetermines the number of storage blocks that will be occupied by storing the second file, which is the block number of the second storage block 242 corresponding to the second file. In practice, when the total number of the second storage block 242 is greater than one, in response to the size of the second file, the block number of the number corresponding to the second file in the second storage block 242 can be equal to or smaller than the total number of the second storage block 242. In step S22, the microprocessor 21 writes the second file into the second storage block 242, and when any of the at least one second storage block is completely written, or the whole second files are completely written, the microprocessor 21 adds to the writing cumulative count by 1. In practice, when the block number corresponding to the second file in the second storage block 242 is greater than one, the microprocessor 21 will sequentially write the second files in the second storage blocks 242. Finally, in step S23, the microprocessor 21 determines whether the writing cumulative count is equal to above-mentioned block number in order to continue writing the second file into the second storage block 242 until the writing cumulative count is equal to the above-mentioned block number. However, in addition to the above-mentioned implementation, an addressing method can also be used for the microprocessor 21 to determine the current progress of writing the second file.

In order to lower the additional time for compensating errors in the situation where errors occur upon transmitting the second file, the step S23 may further comprise substeps S231 and S232. In substep S231, when detecting the writing of the second file stops, the microprocessor 21 determines whether the writing cumulative count is equal to the block number or not. If the writing cumulative count is equal to the block number, it means that the second file has been completely written into the second storage block 242. If the writing cumulative count is smaller than the block number, the flow goes to the substep S232. In the substep S232, under the situation where the microprocessor 21 determines that the writing cumulative count is smaller than the block number, the microprocessor 21 may refer to the writing cumulative count to determine which second storage block 242 is being written when the writing stops, so that the writing of the second storage block 242 can be resumed at the location where the second file is corresponding to the writing cumulative count. Hence, even when errors occur upon transmitting the second file, contents to be rewritten can be drastically decreased.

Moreover, before executing the step S2, in general, whether the storage space of the second storage block 242 is sufficient to contain the second file can be confirmed in advance, and the flow will go to step S3 after the storage space of the second storage block 242 is determined as larger than or equal to the size of the second file.

In the above image output methods of the VGA assembly, by executing the step S4 to use the microprocessor 21 to delete the first file from the first storage block 241, the second file under the current image output method can be viewed as the first file when executing the image output method for the next time. Further, the second storage block 242 storing the second file under the current image output method is also viewed as the first storage block 241 when executing the image output method for the next time.

In view of the above, the present invention provides the VGA card assembly, a monitoring device thereof, and an image output method performed thereby. A memory storing multiple storage blocks is used to store files, and a file to be deleted (e. g. the above-mentioned first file) and a file to be written (e. g. the above-mentioned second file) can be respectively stored into different storage blocks, and thus the two files need not be stored into the same location. Therefore, the user can immediately write in another file to be written (i.e. the above-mentioned second file), without the need for deleting the files for display the current image (i.e. the above-mentioned first file) within the nonvolatile memory. This will not only reduce the duration between the store command by users and the display file, but also avoid the situation that no image file can be displayed during the duration. In addition, if an error occurs when writing another file (e. g. the above-mentioned second file), the original file (e. g. above-mentioned first file) can be still available for the status display.

## Claims

1. A VGA card assembly, adapted to be combined to a motherboard (MB) and a display (D), the VGA card assembly comprising:
a VGA card (1) comprising a circuit board (11) arranged to generate a status signal; and
a monitoring device (2) comprising a microprocessor (21), a status display (23) and a non-volatile memory (24), wherein the microprocessor (21) is coupled to the status display (23), the non-volatile memory (24) and the circuit board (11) , the microprocessor (21) receives the status signal, and the non-volatile memory (24) comprises at least one first storage block (241) and at least one second storage block (242);
wherein before the microprocessor (21) completely writes a second file into the at least one second storage block (242), the microprocessor (21) obtains a first file stored in the at least one first storage block (241), and enables the status display (23) to output images according to one of the status signal and the first file; and after the microprocessor (21) completely writes a second file into the at least one second storage block (242), the microprocessor (21) obtains a second file stored in the at least one second storage block (242), and enables the status display (23) to output images according to at least one of the status signal and the second file.

2. The VGA card assembly according to claim 1, wherein after the microprocessor (21) completely writes a second file into the at least one second storage block (242), the microprocessor (21) deletes the first file stored in the at least one first storage block (241).

3. The VGA card assembly according to claim 1, wherein a number of each of the at least one first storage block (241) and the at least one second storage block (242) is 1, and a size of the at least one first storage block (241) is equal to that of the at least one second storage block (242).

4. A monitoring device (2), arranged to form, together with a VGA card (1), a VGA card assembly, the monitoring device (2) comprising:
a communication port arranged to communicatively connect to the VGA card (1), to receives a status signal;
a non-volatile memory (24) comprising at least one first storage block (241) and at least one second storage block (242);
a microprocessor (21) coupled to the communication port and the non-volatile memory (24), and generating an image data; and
a status display (23) coupled to the microprocessor (21), and generating an image according to the image data;
wherein before the microprocessor (21) completely writes a second file into the at least one second storage block (242), the microprocessor (21) obtains a first file stored in the at least one first storage block (241), and generates the image data according to one of the status signal and the first file; and after the microprocessor (21) completely writes a second file into the at least one second storage block (242), the microprocessor (21) obtains a second file stored in the at least one second storage block (242), and generates the image data according to one of the status signal and the second file.

5. The monitoring device (2) according to claim 4, wherein after the microprocessor (21) completely writes a second file into the at least one second storage block (242), the microprocessor (21) deletes the first file stored in the at least one first storage block (241).

6. The monitoring device (2) according to claim 4, wherein a number of each of the at least one first storage block (241) and the at least one second storage block (242) is 1, and a size of the at least one first storage block (241) is equal to that of the at least one second storage block (242).

7. An image output method of a VGA card assembly, for a status display (23) of VGA card assembly to output images, wherein a microprocessor (21) of the VGA card assembly is coupled to a non-volatile memory (24), the non-volatile memory (24) comprises at least one first storage block (241) and at least one second storage block (242), and the at least one first storage block (241) stores a first file already; and the image output method of a VGA card assembly comprising:
receiving, by the microprocessor (21), a second file;
writing, by the microprocessor (21), the second file into the at least one second storage block (242);
enabling, by the microprocessor (21), the status display (23) to output images corresponding to the first file before completely writing a second file into the at least one second storage block (242); and
enabling, by the microprocessor (21), the status display (23) to output images corresponding to the second file after completely writing a second file into the at least one second storage block (242), and deleting the first file stored in the at least one first storage block (241).

8. The image output method performed by the VGA card assembly according to claim 7, wherein writing, by the microprocessor (21), the second file into the at least one second storage block (242) further comprising:
determining, by the microprocessor (21), whether the block number of the at least one second storage block (242) is equal to the block number of the second file;
sequentially writing the second file into the at least one second storage block (242), and adding, by the microprocessor (21), to a writing cumulative count by 1 when any of the at least one second storage block (242) is completely or the second file is completely written; and
writing, by the microprocessor (21), continuously the second file until the writing cumulative count is equal to the block number of the second file.

9. The image output method performed by the VGA card assembly according to claim 8, wherein writing, by the microprocessor (21), continuously the second file until the writing cumulative count is equal to the block number of the second file further comprises:
determining, by the microprocessor (21), whether the writing cumulative count is equal to the block number of the second file when detecting that writing of the second file stops; and
when the microprocessor (21) determines that the writing cumulative count is smaller than the block number of the second file, continuing writing the second file to the at least one second storage block (242) at a location corresponding to the writing cumulative count.
